# EUROPÄISCHE PATENTSCHRIFT

(11) **EP 4 279 877 B1**
(45) Veröffentlichungstag und Bekanntmachung des Hinweises auf die Patenterteilung: **28.08.2024**
(21) Anmeldenummer: 23160867.0
(22) Anmeldetag: 09.03.2023
(51) Int. Cl.: G01D 11/24

(54) **MESSVORRICHTUNG ZUM MESSEN EINER PHYSIKALISCHEN GRÖSSE IN EINER EIN MEDIUM ENTHALTENDEN EINHEIT**
MEASURING DEVICE FOR MEASURING A PHYSICAL QUANTITY IN A UNIT CONTAINING A MEDIUM
DISPOSITIF DE MESURE POUR MESURER UNE GRANDEUR PHYSIQUE DANS UNE UNITÉ CONTENANT UN MILIEU

(30) Priorität: 16.05.2022 DE 102022112227
(43) Veröffentlichungstag der Anmeldung: 22.11.2023
(73) Patentinhaber: SICK AG, 79183 Waldkirch (DE)
(72) Erfinder: Graner, Thomas, 79211 Denzlingen (DE); Armbruster, Stephan, 77975 Ringsheim (DE)

(56) Entgegenhaltungen:
- DE-A1- 10 127 485
- DE-A1- 102012 201 018
- DE-A1- 102013 208 537
- DE-B3- 102018 117 454

## Beschreibung

Die vorliegende Erfindung betrifft eine Messvorrichtung zum Messen einer physikalischen Größe, wie beispielsweise eines Druckes, einer Temperatur oder eines Füllstandes, in einer ein Medium enthaltenden Einheit gemäß dem Anspruch 1.

In der heutigen Industrie werden fast sämtliche verwendete Einheiten, wie beispielsweise Maschinen, Behälter oder Leitungen, mittels Messvorrichtungen in Form von Sensoren überwacht. Die eingesetzten Sensoren dienen dazu jeweils eine physikalische Größe in der Einheit zu messen, die beispielsweise ein Druck, eine Temperatur oder ein Füllstand eines in der Einheit enthaltenden Mediums sein kann.

Ein Einsatz der Sensoren kann durch Richtlinien oder Standardnormen vorgegeben sein, die bei der Auslegung des Einsatzes der Sensoren einzuhalten sind. Bei einer Dichtheitsschutzklasse IP67 oder IP69 für Gehäuse eines Sensors beispielsweise muss das Gehäuse gegen das Eindringen von Fremdkörpern geschützt sein, das heißt, das Gehäuse ist staubdicht und hält Wasser für einen bestimmten, kurzen Zeitraum ab.

Bei solch dichten Gehäusen kann es passieren, dass durch ständige und schnelle Temperaturwechsel, die durch Umwelt oder Betriebsprozesse bedingt sind, Druckunterschiede im Gehäuse entstehen. Durch diese Druckunterschiede kann es zu sogenannten Pumpeffekten kommen, sodass das Gehäuse trotz Abdichtung Feuchtigkeit zieht und es innerhalb des Gehäuses zu Kondenswasserbildung kommt.

Um diese Pumpeffekte zu vermeiden, werden Druckausgleichselemente eingesetzt, die meist aus einer Membrane, die einerseits luft- und wasserdampfdurchlässig, aber andererseits wasser- und ölabweisend ist, und einer mechanischen Verbindung zwischen einem Gehäuseinnenraum und einer Umgebung des Gehäuses bestehen.

Bei Druckausgleichselemente für die Schutzklasse IP69 ist zusätzlich ein sogenanntes Labyrinth als mechanische Verbindung zwischen der Membrane und der Umgebung vorgesehen, wobei das Labyrinth die Membrane vor starkem Strahlwasser schützt. In diesem Zusammenhang bedeutet Labyrinth, dass die mechanische Verbindung nicht linear, sondern mit mindestens einer Krümmung, ausgebildet ist, so dass die Membrane von außen nicht sichtbar ist und damit keine direkte Verbindung mit der Umgebung hat.

Die im Handel erhältlichen Druckausgleichselemente mit Labyrinth sind in der Anschaffung teurer als Druckausgleichselemente, die nur aus einer Membrane bestehen. Für Druckausgleichselemente mit Labyrinth wird mehr Platz am Gehäuse benötigt, im Vergleich zu Druckausgleichselementen ohne Labyrinth, was das Gehäuse in seinem Maße größer und damit zugleich teurer macht.

Für die Anbringung des Druckausgleichselementes mit Labyrinth am Gehäuse muss das Gehäuse zusätzlich vorbehandelt werden, wie beispielsweise mit einer Durchbohrung und einem Gewinde zu versehen, so dass sich weitere Kosten ergeben. Bei Druckausgleichselementen ohne Labyrinth wird die Membrane auf der Innenseite des Gehäuses aufgeklebt und lediglich eine Öffnung bzw. Durchbohrung in dem Gehäuse vorgesehen. Hierdurch ist die Membrane jedoch nicht vor Strahlwasser geschützt. DE 10 2012 201018 A1 offenbart ein bekanntes Druckmessgerät mit einem Prozessanschluss und einem Steckeranschluss in einem Messgehäuse, wobei im Steckeranschluss ein Kanal für den Druckausgleich zwischen dem Gehäuseinneren und der Umgebung angeordnet

Der Erfindung liegt die Aufgabe zugrunde, eine eingangs genannte Messvorrichtung zum Messen einer physikalischen Größe derart zu verbessern, dass sie kostengünstig und einfach herstellbar ist.

Die Aufgabe wird erfindungsgemäß durch eine Messvorrichtung zum Messen einer physikalischen Größe in einer ein Medium enthaltenden Einheit mit den Merkmalen des Anspruchs 1 gelöst.

Hierbei umfasst die Messvorrichtung zum Messen einer physikalischen Größe in einer ein Medium enthaltenden Einheit:
ein Gehäuse, das eine Wandung zum Behausen einer Messelektronik und einen Anschlussabschnitt zum Verbinden der Messvorrichtung mit der Einheit aufweist,
eine Membrane, die an der Wandung vorgesehen ist, um eine erste Öffnung in der Wandung abzudecken,
einen Steckeranschluss, der benachbart zu der Membrane an der Wandung vorgesehen und ausgebildet ist, eine elektrische Verbindung zwischen der Messelektronik und elektrischen Steckerkontakten für einen mit der Messvorrichtung verbindbaren Stecker bereitzustellen,
eine zweite Öffnung, in die der Steckeranschluss einsteckbar ist,
wobei der Steckeranschluss mit einem Befestigungsabschnitt zum Befestigen des Steckeranschlusses an der Wandung des Gehäuses ausgebildet ist und der Befestigungsabschnitt ein Flanschelement aufweist,
wobei das Flanschelement auf einer Außenseite der Wandung angeordnet ist, und das Flanschelement ausgebildet ist, die erste Öffnung abzudecken und mindestens eine Auslassbohrung aufzuweisen, die mit der ersten Öffnung in Verbindung steht.

Hieraus ergibt sich ein technischer Vorteil, dass die Funktion des Labyrinths in den Steckeranschluss integriert ist, so dass auf ein separates und spezielles Druckausgleichselement mit Labyrinth verzichtet werden kann.

Gemäß einem bevorzugten Ausführungsbeispiel besteht der Steckeranschluss aus einem Außenabschnitt zum Anschließen des Steckers und dem Befestigungsabschnitt, wobei innerhalb des Außenabschnittes die elektrischen Steckerkontakte vorgesehen sind und elektrische Leitungen von den elektrischen Steckerkontakten durch den Befestigungsabschnitt ins Innere des Gehäuses geleitet sind. Damit bleibt die konstruktive Ausgestaltung des Steckeranschlusses, trotz der Integration der Druckausgleichsfunktion, weiterhin einfach und fast gleich zu den herkömmlichen Steckeranschlüssen, so dass keine nennenswerten Zusatzkosten entstehen.

Weiterhin weist gemäß einem weiteren bevorzugten Ausführungsbeispiel der Steckeranschluss einen mit dem Flanschelement verbundenen Innenabschnitt auf, wobei der Innenabschnitt in die zweite Öffnung einsteckbar ist und eine hohlzylinderförmige Form mit einer abgeflachten Außenseite umfasst. Vorzugsweise ist die abgeflachte Seite des Innenabschnittes der Membrane zugewandt. Hierdurch ist ein Ausrichten des Steckeranschlusses auf die erste Öffnung bzw. auf die Membrane einfach möglich.

Gemäß einem weiteren bevorzugten Ausführungsbeispiel ist die zweite Öffnung in der Wandung formschlüssig zu der Form des Innenabschnittes ausgebildet, so dass der Innenabschnitt passgenau durch die zweite Öffnung bis zum Anliegen des Flanschelementes an der Wandung in das Gehäuse einsteckbar ist. Durch die abgeflachte Außenseite des Innenabschnittes kann die zweite Öffnung näher an der ersten Öffnung vorgesehen sein, so dass eine kompaktere Anordnung des Steckeranschlusses an der ersten Öffnung bzw. an der Membrane ermöglicht ist.

Die Montage des Steckeranschusses mit integriertem Labyrinth kann auch insgesamt präziser und einfacher durchgeführt werden. Vorteilhafterweise weist das Flanschelement eine kreisförmige Form auf, die einen größeren Querschnitt als einen Querschnitt des Innenabschnittes aufweist, so dass die erste Öffnung durch das Flanschelement einseitig abgedeckt ist.

Vorteilhafterweise ist eine Halteklammer in einer am Innenabschnitt vorgesehenen ersten Nut einsteckbar, um den Steckeranschluss an das Gehäuse festzuklemmen. Es bedarf somit keiner besonderen Vorverarbeitung des Gehäuses der Messvorrichtung und auch keiner komplizierten Handhabung für die Montage des Steckeranschlusses an dem Gehäuse, da lediglich eine Öffnung in der Wandung des Gehäuses und ein Festklemmen mittels der Halteklammer benötigt werden.

Vorzugsweise weist eine der Wandung zugewandte Seite des Flanschelementes eine zweite Nut auf, die kreisförmig oder spiralförmig ausgebildet ist. Vorteilhafterweise ist die mindestens eine Auslassbohrung koaxial oder radial zu einer Steckeranschlussachse des Steckeranschlusses ausgerichtet. Insbesondere ist die zweite Nut ausgebildet, eine Verbindung zwischen der ersten Öffnung der Wandung und der koaxial oder radial gerichteten Auslassbohrung bereitzustellen, um einen Druckausgleich im Gehäuse zuzulassen.

Damit ist auf einfache Art und Weise eine Integration der Labyrinth-Schutzfunktion für ein Druckausgleichselement in den Steckeranschluss erfolgt, wodurch auf ein separates Druckausgleichselement mit Labyrinth verzichtet werden kann.

Gemäß einem bevorzugten Ausführungsbeispiel ist ein Durchmesser der ersten Öffnung um ein Vielfaches kleiner als ein Durchmesser der zweiten Öffnung. Hierdurch lässt sich die Herstellung der Messvorrichtung mit einer vorgegebenen Dichtheitsschutzklasse weiter vereinfachen und verbilligen.

Die erfindungsgemäße Messvorrichtung kann auf ähnliche Weise durch weitere Merkmale ausgestaltet werden und zeigt dabei ähnliche Vorteile. Derartige weitere Merkmale sind beispielshaft, aber nicht abschließend, in den sich an den unabhängigen Anspruch anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Perspektivdarstellung eines bevorzugten Ausführungsbeispiels einer erfindungsgemäßen Messvorrichtung;
- Fig. 2: eine schematische Schnittansicht entlang einer Längsachse des Ausführungsbeispiels der Figur 1;
- Fig. 3: eine schematische perspektivische Schnittansicht eines oberen Gehäuseabschnittes des Ausführungsbeispiels mit Hervorhebung des Steckeranschlusses, und
- Fig. 4: eine schematische vergrößerte Schnittansicht des Steckeranschlusses des Ausführungsbeispiels nach Fig. 3.

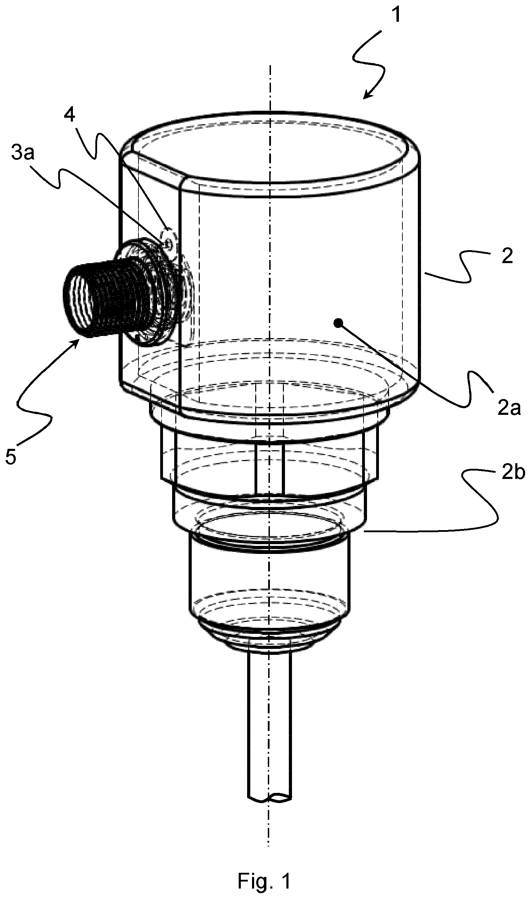

In der Figur 1 ist eine schematische Perspektivdarstellung eines bevorzugten Ausführungsbeispiels einer erfindungsgemäßen Messvorrichtung 1 zum Messen einer physikalischen Größe in einer nicht dargestellten und ein Medium enthaltenden Einheit abgebildet. Bei der physikalischen Größe kann es sich beispielsweise um einen Druck, eine Temperatur oder einen Füllstand des Mediums in der Einheit handeln. Bei der nicht dargestellten Einheit kann es sich beispielsweise um einen Behälter, eine Rohrleitung oder ähnliches handeln.

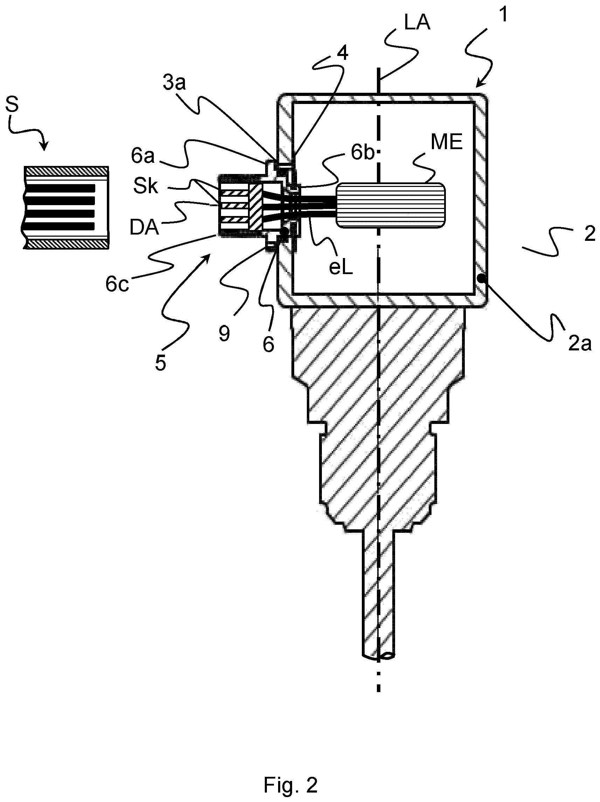

Die Messvorrichtung 1 umfasst ein Gehäuse 2, das eine Wandung 2a aufweist, die eine in der Figur 2 dargestellte Messelektronik ME der Messvorrichtung 1 behaust. Ferner umfasst das Gehäuse 2 einen Anschlussabschnitt 2b, mit dem die Messvorrichtung 1 an die Einheit angebunden werden kann, um die gewünschte physikalische Größe zu messen.

In der Wandung 2a des Gehäuses 2 ist eine erste Öffnung 3a, insbesondere in Form einer Durchbohrung vorgesehen, wobei die erste Öffnung 3a auf einer Innenseite des Gehäuses 2 mittels einer Membrane 4 abgedeckt ist. Die Membrane 4 ist vorzugsweise luft- und wasserdampfdurchlässig, aber wasser-, staub- und ölabweisend, sodass ein Druckausgleich des Inneren des Gehäuses 2 mit der Umgebung möglich ist, um Pumpeffekte zu vermeiden. Die Wandung 2a kann eine zylindrische oder quadratische Querschnittsform aufweisen.

Die Messvorrichtung 1 umfasst ferner einen Steckeranschluss 5, der ausgebildet ist, eine gasdichte elektrische Verbindung zwischen der Messelektronik ME und elektrischen Steckerkontakten Sk für einen mit der Messvorrichtung 1 verbindbaren Stecker S bereitzustellen - wie in der Figur 2 schematisch dargestellt. Der Stecker S kann dazu dienen, die Messvorrichtung 1 beispielsweise mit einer nicht dargestellten Steuerung zu verbinden, um Messsignale zu übermitteln.

Figur 2 zeigt eine schematische Schnittansicht der Messvorrichtung 1 entlang einer Längsachse LA der Messvorrichtung 1 zusammen mit einer Teilansicht des Steckers S.

Der Steckeranschluss 5 ist benachbart zu der Membrane 4 an der Wandung 2a des Gehäuses 2 vorgesehen und mit einem Befestigungsabschnitt 6 zum Befestigen des Steckeranschlusses 5 an der Wandung 2a des Gehäuses 2 ausgebildet. Der Befestigungsabschnitt 6 weist ein Flanschelement 6a auf, wobei das Flanschelement 6a auf einer Außenseite der Wandung 2a des Gehäuses 2 angeordnet ist.

Erfindungsgemäß ist das Flanschelement 6a ausgebildet, die erste Öffnung 3a abzudecken und mindestens eine Auslassbohrung 9 aufzuweisen, die mit der ersten Öffnung 3a in Verbindung steht. Das heißt, das Flanschelement 6a des Steckeranschlusses 5 ermöglicht mit seiner mindestens einen Auslassbohrung 9 einen Druckausgleich zwischen Gehäuseinnerem und Umgebung, so dass ein Kanal zum Druckausgleich in den Steckeranschluss 5 integriert ist.

Insbesondere weist das Flanschelement 6a eine kreisförmige Form auf mit einem derart großen Durchmesser, dass die erste Öffnung 3a außenseitig abgedeckt ist.

Der Steckeranschluss 5 weist insbesondere einen mit dem Flanschelement 6a verbundenen Innenabschnitt 6b auf, wobei der Innenabschnitt 6b in eine zweite Öffnung 3b einsteckbar ist und eine hohlzylinderförmige Form mit einer abgeflachten Außenseite 11 umfasst. Die abgeflachte Außenseite 11 des Innenabschnittes 6b ist der Membrane 4 zugewandt. Dadurch ist beim Einstecken des Steckeranschlusses 5 in das Gehäuse 2 der Steckeranschluss 5 automatisch ausgerichtet.

Zusätzlich verhindert die abgeflachte Außenseite des Innenabschnittes 6b eine Verdrehung des Steckeranschlusses 5 gegenüber dem Gehäuse 2. Das bedeutet, die spezielle Form des Innenabschnittes 6b dient einerseits zum Ausrichten und andererseits zum Verhindern einer Verdrehung des Steckeranschlusses 5 gegenüber der zweiten Öffnung 3b bzw. dem Gehäuse 2.

Ferner besteht der Steckeranschluss 5 zusätzlich aus einem Außenabschnitt 6c zum Anschließen des Steckers S. Innerhalb des Außenabschnittes 6c sind die elektrischen Steckerkontakte Sk vorgesehen. Von den elektrischen Steckerkontakten Sk sind elektrische Leitungen eL durch den Befestigungsabschnitt 6 ins Innere des Gehäuses 2 gasdicht geführt, so dass die elektrischen Steckerkontakte Sk mit der Messelektronik ME verbunden sind.

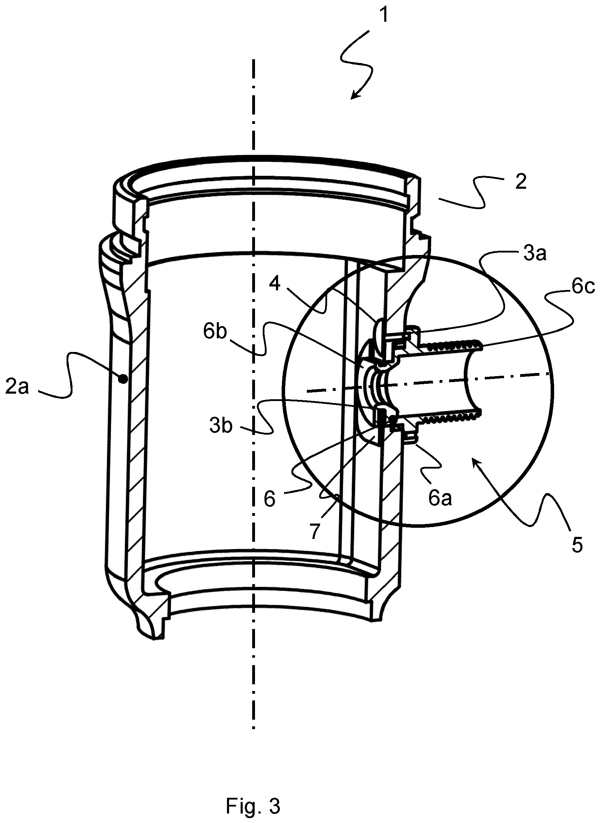

In der Figur 3 ist nur ein oberer Abschnitt des Gehäuses 2 mit dem Steckeranschluss 5 in schematisch perspektivischer Schnittansicht entlang der Längsachse LA der Messvorrichtung 1 dargestellt, wobei die elektrischen Steckerkontakte Sk, die elektrischen Leitungen el und die Messelektronik ME nicht dargestellt sind.

Der Außenabschnitt 6c des Steckeranschlusses 5 ist vorzugsweise mit einem Außengewinde ausgebildet, so dass der Stecker S durch Aufschrauben auf den Außenabschnitt 6c mit dem Steckeranschluss 5 verbunden werden kann.

Die zweite Öffnung 3b in der Wandung 2a ist vorteilhafterweise formschlüssig zu der Form des Innenabschnittes 6b ausgebildet, so dass der Innenabschnitt 6b passgenau durch die zweite Öffnung 3b bis zum Anliegen des Flanschelementes 6a an der Wandung 2a in das Gehäuse 2 einsteckbar ist.

Durch die formschlüssige Ausgestaltung des Innenabschnittes 6b und der zweiten Öffnung 3b ist eine Montage des Steckeranschlusses 5 an das Gehäuse 2 vereinfacht und ein Ausrichten des Flanschelementes 6a zu der ersten Öffnung 3a präzise ausführbar. Zusätzlich kann die zweite Öffnung 3b näher an der Membrane 4 bzw. an der ersten Öffnung 3a angeordnet werden, indem die erste Öffnung 3a im Bereich der abgeflachten Außenseite 11 des Innenabschnittes 6b ausgebildet ist, so dass die gesamte Ausgestaltung des Steckeranschlusses 5 kompakter sein kann.

Das Flanschelement 6a weist eine kreisförmige Form auf, die einen größeren Querschnitt als einen Querschnitt des Innenabschnittes 6b aufweist, so dass die erste Öffnung 3a durch das Flanschelement 6a einseitig abgedeckt ist.

An einem Ende des Innenabschnittes 6b ist eine erste Nut 8 vorgesehen, in der eine Halteklammer 7, wie beispielsweise eine Klemmfeder bzw. ein Sicherungsring, eingesteckt werden kann. Die Halteklammer 7 ist zwischen dem Ende des Innenabschnittes 6b und der Wandung 2 angeordnet, wodurch der Steckeranschluss 5 an das Gehäuse 2 zwischen dem Flanschelement 6a und der Halteklammer 7 festgeklemmt ist.

Ein offener Bereich der in etwa U-förmigen Halteklammer 7 ist in Richtung der ersten Öffnung 3a gerichtet, so dass eine Abdeckung der ersten Öffnung 3a bzw. der Membrane 4 auf der Innenseite des Gehäuses 2 verhindert ist. Dadurch ist es auch gewährleistet, dass die erste Öffnung 3a nur außenseitig durch das Flanschelement 6a des Steckeranschlusses 5 abgedeckt ist.

Zusätzlich kann die ungefähre U-Form der Halteklammer 7 als eine Zentrierhilfe bei einer Anbringung der Membrane 4 dienen, da der offene Bereich der Halteklammer 7 auf die erste Öffnung 3a gerichtet ist. Hierdurch kann die Montagearbeit erleichtert werden.

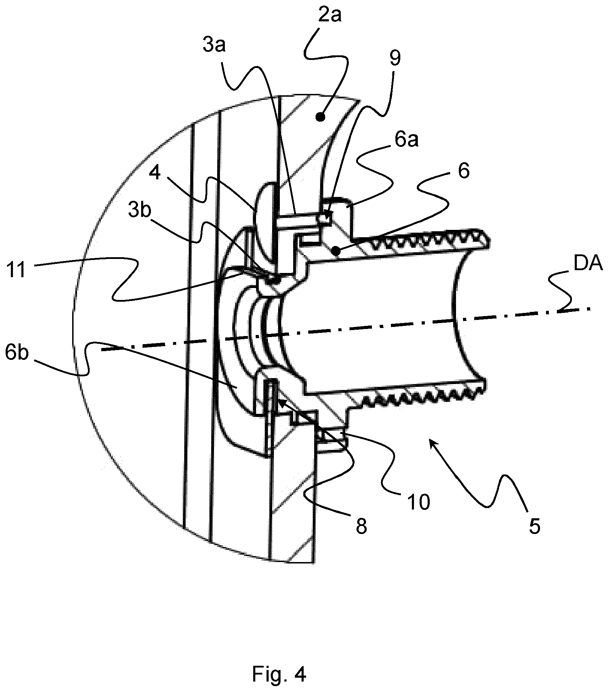

Wie in der schematisch vergrößerten Schnittansicht des Steckeranschlusses 5 in der Figur 4 dargestellt ist, ist die erste Öffnung 3a auf der Außenseite der Wand 2c durch das Flanschelement 6a des Befestigungsabschnittes 6 des Steckeranschlusses 5 vollständig abgedeckt. Auf der Innenseite der Wand 2c ist die erste Öffnung 3a nur durch die Membrane 4 abgedeckt.

Eine der Wandung 2 zugewandte Seite des Flanschelementes 6a weist eine zweite Nut 9 auf, die in dem Flanschelement 6a kreisförmig oder spiralförmig ausgebildet ist. Ferner ist die mindestens eine Auslassbohrung 10 achsparallel zu einer Steckeranschlussachse DA des Steckeranschlusses 5 ausgerichtet. Die mindestens eine Auslassbohrung 10 kann vorzugsweise auch radial zu der Steckeranschlussachse DA des Steckeranschlusses 5 am Flanschelement 6a ausgebildet sein.

Die zweite Nut 9 ist ausgebildet, eine Verbindung zwischen der ersten Öffnung 3a der Wandung 2 und der achsparallel ausgerichteten Auslassbohrung 10 bereitzustellen. Hierzu deckt die zweite Nut 9 vorzugsweise an einem Ende der zweiten Nut 9 die erste Öffnung 3a vollständig ab und mündet am anderen Ende der zweiten Nut 9 in die Auslassbohrung 10.

Durch diese Verbindung zwischen der Membrane 4, der ersten Öffnung 3a und der zweiten Nut 9 sowie der Auslassbohrung 10 des Flanschelementes 6a des Steckeranschlusses 5 kann ein Druckausgleich im Gehäuse 2 bei gleichzeitiger Erfüllung der Dichtheitsschutzklasse IP69 sicher gewährleistet werden. Der Steckeranschluss 5 umfasst somit die Funktionalität eines Labyrinths.

Da die Messvorrichtung 1 bei bestimmten Anwendungen mittels Hochdruckreiniger gereinigt werden muss, ist die Membran 4 durch das Labyrinth gegen direkte Einwirkung durch Strahlwasser vor Zerstörung geschützt.

Weiterhin kann durch die Integration der Labyrinth- und Druckausgleichsfunktion in den Steckeranschluss 5 eine kompaktere Ausgestaltung des Gehäuses 2 der Messvorrichtung 1 ermöglicht werden, da kein zusätzlich großer Bauraum zur Integration eines separaten Druckausgleichselementes mit Labyrinth erforderlich ist.

### Bezugszeichenverzeichnis

- 1: Messvorrichtung
- 2: Gehäuse
- 2a: Wandung
- 2b: Anschlussabschnitt
- 3a: erste Öffnung
- 3b: zweite Öffnung
- 4: Membrane
- 5: Steckeranschluss
- 6: Befestigungsabschnitt
- 6a: Flanschelement
- 6b: Innenabschnitt
- 6c: Außenabschnitt
- 7: Halteklammer
- 8: erste Nut
- 9: zweite Nut
- 10: Auslassbohrung
- 11: abgeflachte Außenseite des Innenabschnittes

- DA: Steckeranschlussachse
- eL: elektrische Leitung
- LA: Längsachse
- ME: Messelektronik
- S: Stecker
- Sk: Steckerkontakte

## Patentansprüche

1. Messvorrichtung (1) zum Messen einer physikalischen Größe in einer ein Medium enthaltenden Einheit, umfassend:
ein Gehäuse (2), das eine Wandung (2a) zum Behausen einer Messelektronik (ME) und einen Anschlussabschnitt (2b) zum Verbinden der Messvorrichtung (1) mit der Einheit aufweist,
eine Membrane (4), die an der Wandung (2a) vorgesehen ist, um eine erste Öffnung (3a) in der Wandung (2a) abzudecken,
einen Steckeranschluss (5), der benachbart zu der Membrane (4) an der Wandung (2a) vorgesehen und ausgebildet ist, eine elektrische Verbindung zwischen der Messelektronik (ME) und elektrischen Steckerkontakten (Sk) für einen mit der Messvorrichtung (1) verbindbaren Stecker (S) bereitzustellen,
eine zweite Öffnung (3b), in die der Steckeranschluss (5) einsteckbar ist,
wobei der Steckeranschluss (5) mit einem Befestigungsabschnitt (6) zum Befestigen des Steckeranschlusses (5) an der Wandung (2a) des Gehäuses (2) ausgebildet ist und der Befestigungsabschnitt (6) ein Flanschelement (6a) aufweist,
wobei das Flanschelement (6a) auf einer Außenseite der Wandung (2a) angeordnet ist, und das Flanschelement (6a) ausgebildet ist, die erste Öffnung (3a) abzudecken und mindestens eine Auslassbohrung (10) aufzuweisen, die mit der ersten Öffnung (3a) in Verbindung steht.

2. Messvorrichtung (1) nach Anspruch 1, wobei der Steckeranschluss (5) aus einem Außenabschnitt (6c) zum Anschließen des Steckers (S) und dem Befestigungsabschnitt (6) besteht, und wobei innerhalb des Außenabschnittes (6c) die elektrischen Steckerkontakte (Sk) vorgesehen sind und elektrische Leitungen (eL) von den elektrischen Steckerkontakten (Sk) durch den Befestigungsabschnitt (6) ins Innere des Gehäuses (2) geleitet sind.

3. Messvorrichtung (1) nach Anspruch 1 oder 2, wobei der Steckeranschluss (5) einen mit dem Flanschelement (6a) verbundenen Innenabschnitt (6b) aufweist, wobei der Innenabschnitt (6b) in die zweite Öffnung (3b) einsteckbar ist und eine hohlzylinderförmige Form mit einer abgeflachten Außenseite (11) umfasst.

4. Messvorrichtung (1) nach Anspruch 3, wobei die abgeflachte Seite des Innenabschnittes (6b) der Membrane (4) zugewandt ist.

5. Messvorrichtung (1) nach Anspruch 3 oder 4, wobei die zweite Öffnung (3b) in der Wandung (2a) formschlüssig zu der Form des Innenabschnittes (6b) ausgebildet ist, so dass der Innenabschnitt (6b) passgenau durch die zweite Öffnung (3b) bis zum Anliegen des ersten Flanschelementes (6a) an der Wandung (2a) in das Gehäuse (2) einsteckbar ist.

6. Messvorrichtung (1) nach einem der vorhergehenden Ansprüche 3 bis 5, wobei das Flanschelement (6a) eine kreisförmige Form aufweist, die einen größeren Querschnitt als einen Querschnitt des Innenabschnittes (6b) aufweist, so dass die erste Öffnung (3a) durch das Flanschelement (6a) außenseitig abgedeckt ist.

7. Messvorrichtung (1) nach einem der vorhergehenden Ansprüche 3 bis 6, wobei eine Halteklammer (7) in einer am Innenabschnitt (6b) vorgesehenen ersten Nut (8) einsteckbar ist, um den Steckeranschluss (5) an das Gehäuse (2) festzuklemmen.

8. Messvorrichtung (1) nach einem der vorhergehenden Ansprüche, wobei eine der Wandung (2a) zugewandte Seite des Flanschelementes (6a) eine zweite Nut (9) aufweist, die kreisförmig oder spiralförmig ausgebildet ist.

9. Messvorrichtung (1) nach einem der vorhergehenden Ansprüche, wobei die mindestens eine Auslassbohrung (10) koaxial oder radial zu einer Steckeranschlussachse (DA) des Steckeranschlusses (5) ausgerichtet ist.

10. Messvorrichtung (1) nach Anspruch 9, wobei die zweite Nut (9) ausgebildet ist, eine Verbindung zwischen der ersten Öffnung (3a) und der Auslassbohrung (10) bereitzustellen, um einen Druckausgleich im Gehäuse (2) zuzulassen.

11. Messvorrichtung (1) nach einem der vorhergehenden Ansprüche, wobei ein Durchmesser der ersten Öffnung (3a) um ein Vielfaches kleiner als ein Durchmesser der zweiten Öffnung (3b) ist.

## Claims

1. A measuring device (1) for measuring a physical value in a unit containing a medium comprising:
a housing (2) that has a wall (2a) for housing electronic measuring equipment (ME) and a connection section (2b) for connecting the measuring device (1) to the unit;
a membrane (4) that is provided at the wall (2a) to cover a first opening (3a) in the wall (2a);
a plug connection (5) that is provided adjacent to the membrane (4) at the wall (2a) and that is configured to provide an electrical connection between the electronic measuring equipment (ME) and electric plug contacts (Sk) for a plug (S) connectable to the measuring device (1);
a second opening (3b) into which the plug connection (5) is pluggable, wherein the plug connection (5) is formed with a fastening section (6) to fasten the plug connection (5) to the wall (2a) of the housing (2) and the fastening section (6) has a flange element (6a);
wherein the flange element (6a) is arranged on an outer side of the wall (2a) and the flange element (6a) is configured to cover the first opening (3a) and to have at least one outlet borehole (10) that is in communication with the first opening (3a).

2. A measuring device (1) in accordance with claim 1, wherein the plug connection (5) comprises an outer section (6c) for connecting the plug (S) and the fastening section (6); and wherein the electrical plug contacts (Sk) are provided within the outer section (6c) and electrical lines (eL) are conducted from the electrical plug contacts (Sk) through the fastening section (6) into the interior of the housing (2).

3. A measuring device (1) in accordance with claim 1 or 2, wherein the plug connection (5) has an inner section (6b) connected to the flange element (6a), with the inner section (6b) being pluggable into the second opening (3b) and comprising a hollow cylindrical shape with a flattened outer side (11).

4. A measuring device (1) in accordance with claim 3, wherein the flattened side of the inner section (6b) is facing the membrane (4).

5. A measuring device (1) in accordance with claim 3 or 4, wherein the second opening (3b) is formed form-fitting with the shape of the inner section (6b) so that the inner section (6b) is pluggable into the housing (2) with an exact fit through the second opening (3b) up to a contact of the first flange element (6a) at the wall (2a).

6. A measuring device (1) in accordance with any claim 3 to 5, wherein the flange element (6a) has a circular shape that has a greater cross-section than a cross-section of the inner section (6b) so that the first opening (3a) is covered by the flange element (6a) at the outer side.

7. A measuring device (1) in accordance with any claim 3 to 6, wherein a holding clamp (7) is pluggable into a first groove (8) provided at the inner section (6b) to clamp the plug connection (5) tight to the housing.

8. A measuring device (1) in accordance with any preceding claim, wherein a side of the flange element (6a) facing the wall (2a) has a second groove (9) that is of circular or spiral shape.

9. A measuring device (1) in accordance with any preceding claim, wherein the at least one outlet borehole (10) is aligned coaxially or radially with a plug connection axis (DA) of the plug connection (5).

10. A measuring device (1) in accordance with claim 9, wherein the second groove (9) is configured to provide a connection between the first opening (3a) and the outlet bore (10) to permit a pressure balance in the housing (2).

11. A measuring device (1) in accordance with any preceding claim, wherein a diameter of the first opening (3a) is smaller by a multiple than a diameter of the second opening (3b).

## Revendications

1. Dispositif de mesure (1) pour mesurer une grandeur physique dans une unité contenant un milieu, comprenant :
un boîtier (2) qui comprend une paroi (2a) pour loger une électronique de mesure (ME) et une partie de connexion (2b) pour connecter le dispositif de mesure (1) à l'unité ;
une membrane (4) prévue sur la paroi (2a) pour couvrir une première ouverture (3a) dans la paroi (2a),
un connecteur enfichable (5) prévu sur la paroi (2a) adjacente à la membrane (4) et configuré pour fournir une connexion électrique entre l'électronique de mesure (ME) et des contacts électriques de connecteur (Sk) pour un connecteur (S) pouvant être connecté au dispositif de mesure (1) ;
une deuxième ouverture (3b) dans laquelle le connecteur enfichable (5) peut être enfiché,
dans lequel le connecteur enfichable (5) est disposé d'une partie de fixation (6) pour fixer le connecteur enfichable (5) à la paroi (2a) du boîtier (2) et la partie de fixation (6) comprend un élément de bride (6a), dans lequel l'élément de bride (6a) est disposé sur un côté extérieur de la paroi (2a) et l'élément de bride (6a) est configuré pour couvrir la première ouverture (3a) et pour comporter au moins un trou de forage de sortie (10) communiquant avec la première ouverture (3a).

2. Dispositif de mesure (1) selon la revendication 1, dans lequel le connecteur enfichable (5) consiste d'une partie extérieure (6c) pour connecter le connecteur (S) et la partie de fixation (6), et dans lequel les contacts électriques de connecteur (Sk) sont prévus à l'intérieur de la partie extérieure (6c) et les lignes électriques (eL) sont guidées des contacts électriques de connecteur (Sk) à travers la partie de fixation (6) à l'intérieur du boîtier (2).

3. Dispositif de mesure (1) selon la revendication 1 ou 2, dans lequel le connecteur enfichable (5) comprend une partie intérieure (6b) reliée à l'élément de bride (6a), dans lequel la partie intérieure (6b) peut être enfiché dans la deuxième ouverture (3b) et comporte une forme cylindrique creuse avec une face extérieure aplatie (11).

4. Dispositif de mesure (1) selon la revendication 3, dans lequel la face aplatie de la partie intérieure (6b) est orientée vers la membrane (4).

5. Dispositif de mesure (1) selon la revendication 3 ou 4, dans lequel la deuxième ouverture (3b) dans la paroi (2a) est configuré à forme finale par rapport à la forme de la section intérieure (6b), de sorte que la partie intérieure (6b) peut être enfichée dans le boîtier (2) avec un ajustement exact à travers la deuxième ouverture (3b) jusqu'à un contact du premier élément de la bride (6a) avec la paroi (2a).

6. Dispositif de mesure (1) selon l'une des revendications 3 à 5, dans lequel l'élément de bride (6a) comprend une forme circulaire dont la section transversale est supérieure à une section transversale de la partie intérieure (6b), de sorte que la première ouverture (3a) est recouverte extérieurement par l'élément de bride (6a).

7. Dispositif de mesure (1) selon l'une des revendications 3 à 6, dans lequel une pince de maintien (7) est enfichable dans une première rainure (8) prévue dans la partie intérieure (6b) pour serrer le connecteur enfichable (5) contre le boîtier (2).

8. Dispositif de mesure (1) selon l'une des revendications précédentes, dans lequel un côté de l'élément de bride (6a) orienté vers la paroi (2a) comprend une deuxième rainure (9) qui est de forme circulaire ou spiroïdal.

9. Dispositif de mesure (1) selon l'une des revendications précédentes, dans lequel ledit au moins un trou de forage de sortie (10) est orienté coaxialement ou radialement par rapport à un axe du connecteur enfichable (DA) du connecteur enfichable (5).

10. Dispositif de mesure (1) selon la revendication 9, dans lequel la deuxième rainure (9) est configurée pour fournir une communication entre la première ouverture (3a) et le trou de forage de sortie (10) afin de permettre un équilibrage de pression dans le boîtier (2).

11. Dispositif de mesure (1) selon l'une des revendications précédentes, dans lequel un diamètre de la première ouverture (3a) est plusieurs fois inférieur à un diamètre de la deuxième ouverture (3b).
